# EUROPÄISCHE PATENTSCHRIFT

(11) **EP 3 419 919 B1**
(45) Veröffentlichungstag und Bekanntmachung des Hinweises auf die Patenterteilung: **08.04.2020**
(21) Anmeldenummer: 17714637.0
(22) Anmeldetag: 16.02.2017
(51) Int. Cl.: B65G 17/24, B07C 5/342, B65G 47/244, B65G 47/252

(54) **DREH- UND POSITIONIERVORRICHTUNG, INSBESONDERE FÜR KUGELIGE GEGENSTÄNDE**
ROTATING AND POSITIONING DEVICE, IN PARTICULAR FOR SPHERICAL ARTICLES
DISPOSITIF DE ROTATION ET DE POSITIONNEMENT, EN PARTICULIER POUR DES OBJETS SPHÉRIQUES

(30) Priorität: 23.02.2016 IT UA20161302
(43) Veröffentlichungstag der Anmeldung: 02.01.2019
(73) Patentinhaber: Meccanica Zucal Di F.ili Zucal Paolo, Sergio E Emanuele SNC, 38010 Romeno (TN) (IT)
(72) Erfinder: ZUCAL, Sergio, I-38010 Romeno (TN) (IT)
(74) Vertreter: Oberosler, Ludwig
(86) Internationale Anmeldenummer: PCT/EP2017/000216
(87) Internationale Veröffentlichungsnummer: WO 2017/144164

(56) Entgegenhaltungen:
- EP-A1- 0 319 239
- EP-A1- 2 921 432
- WO-A1-2010/005309
- JP-A- H02 222 759

## Beschreibung

Die Erfindung bezieht sich auf eine Drehvorrichtung für, insbesondere kugelförmige, Gegenstände welche, gemäß verschiedener Achsen, gedreht werden, um an allen oder an einem Teil der Außenflächen des Gegenstandes Erhebungen verschiedener Art, z.B. betreffend die Farbe, die Geometrie und/oder die Oberflächenbeschaffenheit (matt, reflektierend, runzelig, usw.) durchzuführen, um anschließend an diese Erhebungen die Positionierung des Gegenstandes derart durchzuführen, dass jener Teil welcher eine bestimmte Beschaffenheit (farbliche, geometrische, ...) aufweist, derart angeordnet ist, dass die eventuelle Entnahme des Gegenstandes und/oder die folgenden Bearbeitungszyklen, bzw. das Ausscheiden des Gegenstandes, begünstigt wird.

Es sind Mechanismen, wie Rollen-Transportbänder, bekannt welche, z.B. landwirtschaftliche Produkte, in Drehung versetzen um das Erkennen eventueller Defekte und Vorzüge seitens der, für die Sortierung/Bearbeitung vorgesehenen, Personen zu erleichtern.

Es ist bekannt, auf kegelstumpfförmige, mit den kleineren Kegelgrundflächen sich gegenüberliegend angeordnete Rollenpaare, abgelegte Äpfel, in Drehung zu versetzen, dabei sind die Rollen durch einen einzigen Motor synchron angetrieben um, während der Drehung, farbliche Erhebungen durchzuführen; die Drehung wird unterbrochen sobald der Apfel, z.B. mit der "gefärbten Wange" nach oben und mit dem Stängel wesentlich parallel zur Achse der Rollen liegt. An derartigen Mechanismen ist auch ein vertikal, zwischen den besagten Rollen, bewegliches, meist mit Saugnapf ausgestattetes, Element vorgesehen um damit den Apfel, infolge des Abhebens von den Rollen, um eine vertikale Achse zu drehen. Die Praxis hat gezeigt, dass die besagten Dreh-, Erhebungs- und Positioniervorrichtungen den Nachteil aufweisen, dass der Prozentsatz der erfolgten gewünschten Positionierung eher niedrig ist, was auf die unregelmäßige und unterschiedliche Form der einzelnen Apfelsorten und auf die Positionierung des Apfels bei seiner Auflage auf die Rollen zurückzuführen ist. Der niedrige Prozentsatz der gewünschten Positionierung bedingt natürlich eine niedrige Leistung während dem folgenden Sortierungs- und Verpackungsablauf der Früchte.

Aus der EP 0319239 A1, welche die Merkmale des Oberbegriffs des Anspruchs 1 offenbart, ist ein Förderband bekannt welches aus Rollenpaare besteht welche leerlaufend sind und, durch Reibung auf feststehenden unteren Führungen, in die selbe Richtung drehend bewegt werden und, durch Reibung auf einem motorbetriebenen Riemen, in Gegenrichtung bewegt werden. Dieses System ist geeignet um einen kugelförmigen Gegenstand, z.B. einen Apfel, welcher auf zwei sich gegenüberliegenden, konischen Rollenpaare liegt, in Drehung um eine Drehachse parallel zu den Rollenachsen zu versetzen und in Drehung um eine, zu den Rollenachsen, vertikale Achse zu versetzen sobald die Rollen mittels dem motorbetriebenen Riemen gegenläufig oder mit unterschiedlicher Geschwindigkeit bewegt werden. Dieses System ermöglicht nicht das Arretieren des, auf den Rollen liegenden, Gegenstandes sobald dieser eine vorbestimmte Position einnimmt um diese, durch bekannte, z.B. farbliche und/oder geometrische, Erhebungen definierte Position, beizubehalten und für die folgende Bearbeitung oder die Verpackung entnommen werden zu können.

Aus der EP 2921432 A1 ist ein Förderband bekannt welches aus freilaufend gelagerten Rollen mit, zueinander parallelen und gleich beabstandeten, quer zur Förderbewegung verlaufenden, Achsen besteht, diese Rollen werden, während der Förderbewegung, durch Reibung an feststehenden Führungen welche jeder Rollenreihe entsprechen, angetrieben und zwar wird durch, unterhalb der Rollen liegende, Führungen eine Drehrichtung und durch, oberhalb der Rollen liegender, Führungen, die entgegengesetzte Drehrichtung erzeugt. Auf diese Weise wird eine Drehung in die gleiche Richtung zweier paarweise angeordneter Reihen von Rollen erzeugt wenn für beide Reihen die Führungen oberhalb oder unterhalb angeordnet sind, während eine Drehung in Gegenrichtung erzeugt wird wenn für eine Reihe die Führung oberhalb und für die andere Reihe die Führung unterhalb vorgesehen ist. Dieses System ermöglicht visuelle und/oder instrumentale Erhebungen an den Außenflächen des in Bearbeitung stehenden Gegenstandes, es sieht aber nicht das Arretieren des Gegenstandes vor sobald dieser eine vorbestimmte ideale Position einnimmt um seine Entnahme für die folgende Bearbeitung oder für seine Verpackung zu erleichtern.

Aus der JP 02222759 ist ein Förderband bekannt welches aus einer Serie konischer, sich gegenüberliegend gelagerter, gemäß zwei zueinander parallelen Reihen angeordneter, Rollen besteht um an der gesamten Außenfläche der aufgelegten einzelnen Früchte instrumentale Erhebungen durchzuführen. Die einzelnen Rollen sind freilaufend gelagert und sind über eine Strecke durch Reibung an einer feststehenden unteren Führung angetrieben, wodurch der aufgelegten Frucht eine Drehung um eine Achse parallel zu den Drehachsen der Rollen übertragen wird, über eine weitere Strecke wird durch motorbetriebene Rollen die Drehung auf die Rollen übertragen um, durch gegenläufige Drehung oder durch Drehung mit unterschiedlicher Geschwindigkeit, der Frucht eine Drehung um eine vertikale Achse zu übertragen. Das System sieht weiters, in einer Position unterhalb der zwei Reihen von Rollen welche das Förderband bilden, eine längliche motorbetriebene Rolle vor um der Frucht eine Drehung um eine horizontale Achse, welche zur Förderrichtung der zwei Reihen der verketteten Rollen parallel verläuft, zu übertragen. Die Auflage einer kugelförmigen Frucht auf der besagten länglichen Rolle hängt von deren Durchmesser und von der Unregelmäßigkeit der Form ab. Wenn die Frucht derartige Form und Ausmaße hat, dass sie auf der besagten länglichen Rolle aufliegt, riskiert diese Beschädigungen ausgesetzt zu sein, welche durch den extrem kleinen Auflagebereich und durch die Drehrichtung der besagten Rolle quer zur Drehung der verketteten Transportrollen, verursacht werden. Das System sieht die Durchführung instrumentale Erhebungen vor, ohne dass eine Positionierund Arretiervorrichtung für die vorbestimmte, eventuell durch die Instrumente festgestellte Position, vorgesehen ist um die Entnahme der Frucht in dieser Position für die folgenden Bearbeitungen oder die Verpackung durchführen zu können.

Die Erfindung stellt sich die Aufgabe eine Dreh- und Positioniervorrichtung der vorgenannten Art zu schaffen, welche eine wirksame visuelle und/oder instrumentale Erhebung an der gesamten Oberfläche des Objektes und dessen Positionierung und Arretierung mit jenem Bereich, welcher die gewünschten, z.B. farblichen und/oder geometrischen, Eigenschaften aufweist, derart erfolgt, dass die anschließenden Sortier- und/oder Verpackungsarbeiten begünstigt werden, wobei eine hohe Arbeitsleistung, unabhängig von den Unregelmäßigkeiten der Form des zu bearbeitenden Gegenstandes, erreicht wird.

Diese Aufgabe wird durch die Dreh- und Positioniervorrichtung mit den Merkmalen des Anspruchs 1 gelöst. Die Erfindung schlägt vor, den zu bearbeitenden Gegenstand in einem Element mit Mulde aufzunehmen, wobei die Mulde im unteren Bereich, in einer Position entsprechend mindestens zweier Rollen oder Riemen einer darunter angeordneter Antriebsgruppe, Durchbrüche aufweist um, bei abgesenktem Element mit Mulde und Auflage des Gegenstandes auf den Rollen, bzw. auf den Riemen, den Gegenstand gemäß wesentlich vertikal und horizontal durch den Gegenstand verlaufende Achsen zu drehen, so dass alle Bereiche der, den Gegenstand umhüllenden, Außenoberfläche "inspizierbar" sind. Die besagten Drehungen des Gegenstandes um zwei Achsen sind erfindungsgemäß dadurch erreichbar, dass dieser auf mindestens zwei, zueinander koaxiale Rollen oder auf Riemen oder Rollen deren Achsen zu einem tiefer liegendem Punkt vertikal unter der Ebene der Achsen konvergieren, gelegt wird, dabei ist jede der Rollen, bzw. der Riemen durch einen eigenen Motor angetrieben um, voneinander unabhängig, die Drehzahl ändern zu können. Der zu bearbeitende Gegenstand ist in seiner rollenden Position innerhalb der besagten, in der Form entsprechenden, Mulde durch innerhalb dieser vorgesehene Auflagen, durch eine oder mehrere leerlaufende Rollen oder multidirektional drehende Kugeln, gesichert, wobei die Mulde Durchbrüche aufweist über welche die Berührung mit den Rollen oder den Riemen der darunter angeordneten Antriebsgruppe erfolgt. Die besagte Antriebsgruppe kann mit drei Rollen mit zueinander parallelen Achsen welche in einer einzigen Ebene liegen oder zu einem einzigen, in einer tieferen Ebene liegenden, Punkt oder zu einer Linie konvergieren, ausgestattet sein, dabei können die zwei jeweils nebeneinander liegenden Rollen paarweise durch einen einzigen Motor angetrieben werden, während die dritte gegenüberliegend angeordnete Rolle durch einen zweiten Motor, unabhängig vom ersten, angetrieben wird. Die besagte einzelne Rolle kann erfindungsgemäß durch ein Rollenpaar ersetzt werden, deren Rollen gleich jener des ersten Rollenpaares sind, wobei die Drehachsen zueinander parallel und zu den Achsen des ersten Rollenpaares ausgerichtet sind oder wobei die Achsen zu einem einzigen Punkt oder einer Gerade in einer tiefer liegenden Ebene konvergieren. Insbesondere um einen, auf den besagten Rollen liegenden, kugeligen Gegenstand in Drehungen zu versetzen, ist es vorteilhaft wenn diese, insbesondere wenn deren Achsen in einer einzigen gemeinsamen Ebene liegen, die Form eines Kegelstumpfes haben und gemäß der Achsen und quer zu den Achsen um ein Maß zueinander beabstandet sind, welches kleiner als der kleinste Durchmesser des Gagenstandes ist. Bei gleicher Drehrichtung und identischer Drehzahl der Rollen oder der Rollenpaare, bzw. des Rollenpaares und der einzelnen Rolle, erfolgt die Drehung des aufgelegten Gegenstandes gemäß einer (horizontalen) Achse welche zu den Achsen der Rollen wesentlich parallel verläuft. Bei Drehung der beiden Rollen, bzw. der Rollenpaare, mit unterschiedlicher Drehzahl oder bei Drehung einer Rolle zur anderen, bzw. eines Rollenpaares zum zweiten Rollenpaar, bzw. zu einer einzelnen Rolle, in entgegengesetzte Richtung, hingegen dreht sich der aufgelegte Gegenstand um eine, zu den Achsen der Rollen, wesentlich vertikale Achse. Die selben Drehungen des Gegenstandes können durch den Einsatz von getrennt angetriebenen Riemen erreicht werden. Die Drehungen des, auf die Rollen aufgelegten, Gegenstandes um zwei Achsen, ermöglicht es jeden Bereich der Außenfläche des Gegenstandes wirkungsvollen Erhebungen zu unterziehen, weil es möglich ist diesen, z.B. um einen relativ kleinen Winkel um die vertikale Achse zu drehen um ihn anschließend, z.B. um 360° um die horizontale Achse zu drehen, durch Wiederholung dieser Drehungen um weitere kleine Winkel um die vertikale Achse und anschließende jeweilige Drehungen um 360°, erhält man ein Netz von Erhebungen gleich jenem der Längen- und Breitengrade um einen Globus. Natürlich ist es möglich auch wirkungsvolle Erhebungen durch unterschiedliche Sequenzen von Drehungen zu erreichen, in vielen Fällen können die Erhebungen unterbrochen werden sobald der, z.B. farbliche oder geometrische, Bereich erfasst ist welcher die gewünschte Positionierung des Gegenstandes bestimmt, die Rollen führen anschließend die nötigen Drehungen aus um die entsprechende Positionierung des Gegenstandes zu erreichen welche die folgenden Sortier- und/oder Verpackungsarbeiten begünstigen.

Es ist vorteilhaft den, zwecks Erhebungen, zu drehenden Gegenstand, der einzelnen Antriebsgruppe oder einer Mehrzahl von Antriebsgruppen, mittels eines spezifischen Förderbandes zuzuführen welches aus steifen, quer angeordneten, verketteten Elementen besteht, jedes dieser weist eine Mulde auf welche geeignet ist den zu drehenden Gegenstand aufzunehmen. Die besagte Mulde eines jeden Elementes weist seitliche Durchbrüche auf welche so angeordnet sind, dass durch Absenken des steifen Elementes mit Mulde in Bezug zur Antriebsgruppe mit Rollen, bzw. Riemen, diese mit dem Gegenstand direkt in Berührung kommen um ihm die vorgesagten Drehungen zu übertragen. Nach Abschluss der Erhebungen und der gewünschten Positionierung erfolgt die Arretierung der Rollen/Riemen und das steife Element mit Mulde kann angehoben werden, wodurch der in der Mulde enthaltene Gegenstand von den Rollen abgehoben wird um, ohne seine Positionierung zu verändern, entnommen, bzw. den folgenden Bearbeitungen zugeführt zu werden.

Erfindungsgemäß ist es möglich, durch den Einsatz von Förderbänder welche aus steifen Elementen mit Mulde bestehen, die Drehung und die Positionierung von Gegenständen zu erreichen welche verschiedene, z.B. zylindrische, konische, eiförmige, Form, auch mit ebenen Außenflächen, haben. Insbesondere in diesem letzten Fall, wenn die Auflagefläche des zu bearbeitenden Gegenstandes eben ist, kann es vorteilhaft sein, dass der zu bearbeitende Gegenstand direkt auf den Riemen aufliegt welche einzeln und voneinander unabhängig angetrieben sind. In diesem Fall haben die besagten Riemen größere Breite und laufen nebeneinander mit einem kleinen Abstand zueinander. Durch die Bewegung der Riemen mit unterschiedlicher Geschwindigkeit oder in Gegenrichtung wird die Drehung des aufgelegten Gegenstandes, gemäß einer vertikalen Achse, senkrecht zu den Riemen, bewirkt während für eine Drehung um eine horizontale Achse, quer zur Förderrichtung des Gegenstandes der Einsatz bekannter Vorrichtungen notwendig ist.

Die Erfindung schließt nicht aus dass, im Fall von zu bearbeitenden Gegenständen mit unregelmäßiger Form, am Element mit Mulde ein oder mehrere bewegliche Stellorgane vorgesehen sind welche geeignet sind um den zu bearbeitenden Gegenstand in eine bestimmte, für die Durchführung der Erhebungen und der Entnahme des Gegenstandes günstige, Position zu bringen und in dieser Position zu halten. Diese beweglichen Stellorgane können auch an den einzelnen Antriebsgruppen vorgesehen sein und durch einen im Element mit Mulde vorgesehenen Durchbruch hindurch wirken.

Die Erfindung wird anhand einiger, in den Zeichnungen schematisch dargestellter, vorzuziehender Ausführungsbeispiele der erfindungsgemäßen Dreh- und Positioniervorrichtung näher erklärt, diese erfüllen rein erklärenden, nicht begrenzenden Zweck.

Die Fig. 1 zeigt in perspektivischer Darstellung den Mechanismus einer erfindungsgemäßen Dreh- und Positioniervorrichtung, ohne Element mit Mulde und ohne Rahmen, mit zwei zueinander koaxialen Rollenpaare deren Achsen in einer einzigen Ebene liegen, welche getrennt über Zahnriemen angetrieben werden, welche die Riemenscheiben der einzelnen Rollen umlaufen.

Die Fig. 2 ist eine Seitenansicht des in Fig. 1 gezeigten Mechanismus.

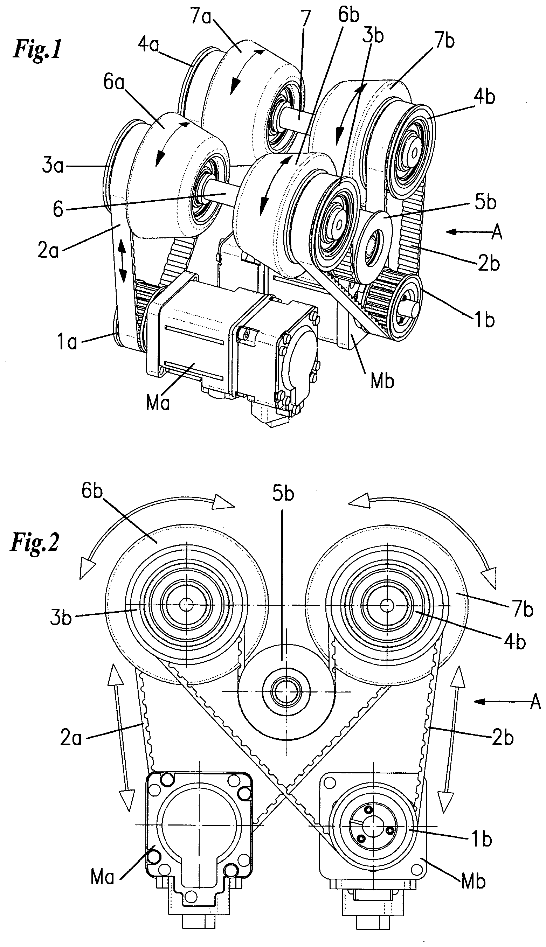

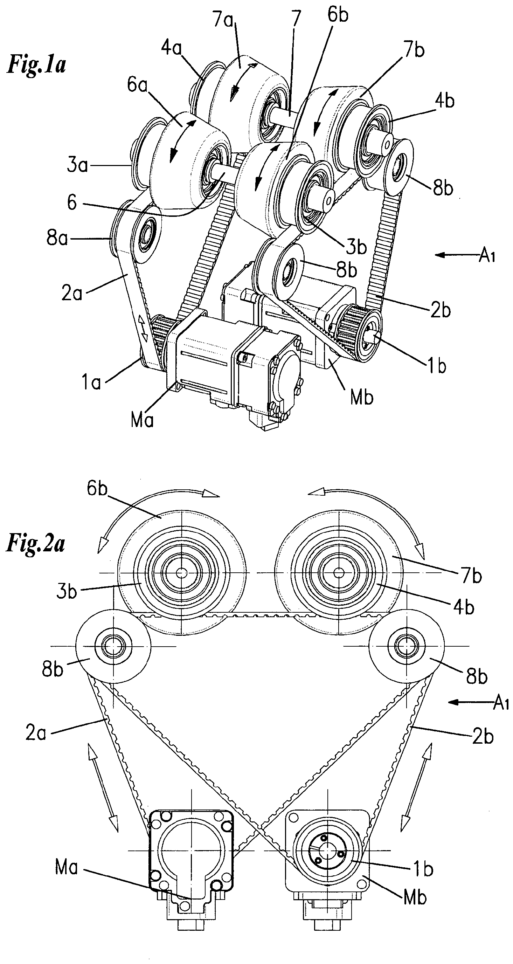

Die Fig. 1a zeigt in perspektivischer Darstellung den Mechanismus einer erfindungsgemäßen Dreh- und Positioniervorrichtung, ohne Rahmen, mit zwei zueinander koaxialen Rollenpaare deren Achsen in einer einzigen Ebene liegen, welche getrennt über Zahnriemen angetrieben werden welche tangential zu den Riemenscheiben der einzelnen Rollen verlaufen.

Die Fig. 2a ist eine Seitenansicht des in Fig. 1a gezeigten Mechanismus.

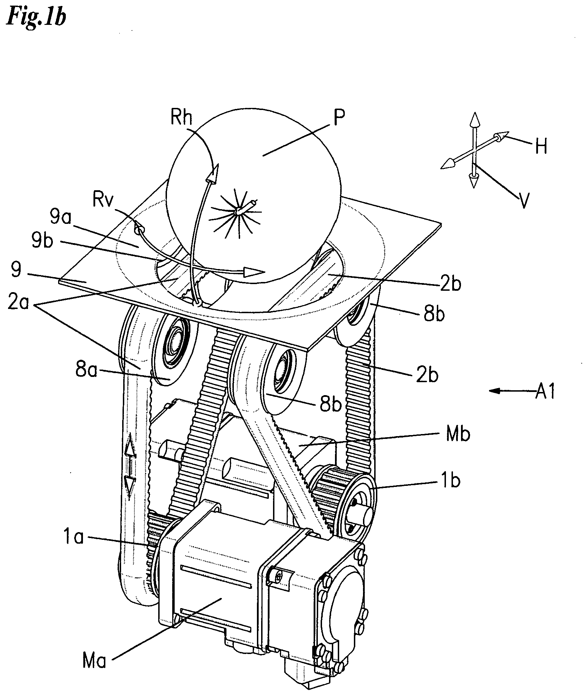

Die Fig. 1b zeigt in perspektivischer Darstellung den in Fig. 1a gezeigten Mechanismus mit einem Element mit Mulde welche einen Apfel aufnimmt, wobei dieser auf den Riemen des darunter angeordneten Antriebsmechanismus aufliegt.

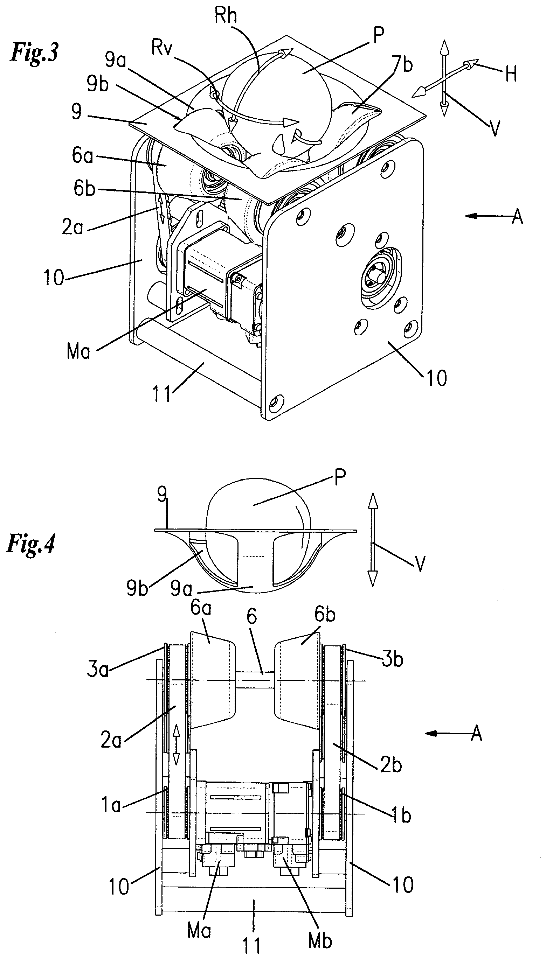

Die Fig. 3 zeigt in perspektivischer Darstellung den in Fig. 1 gezeigten Mechanismus mit Rahmen, mit einem steifen Element mit Mulde welche untere, seitliche Durchbrüche aufweist, für die Heranführung eines Apfels, wobei dieser auf den Rollen aufliegt deren Achsen in einer einzigen Ebene liegen.

Die Fig. 4 ist die Seitenansicht von links des, in Fig. 3 gezeigten, Mechanismus, mit dem steifen Element mit Mulde welche untere, seitliche Durchbrüche aufweist und einen Apfel beinhaltet und in einer von den Rollen abgehobenen Position sich befindet.

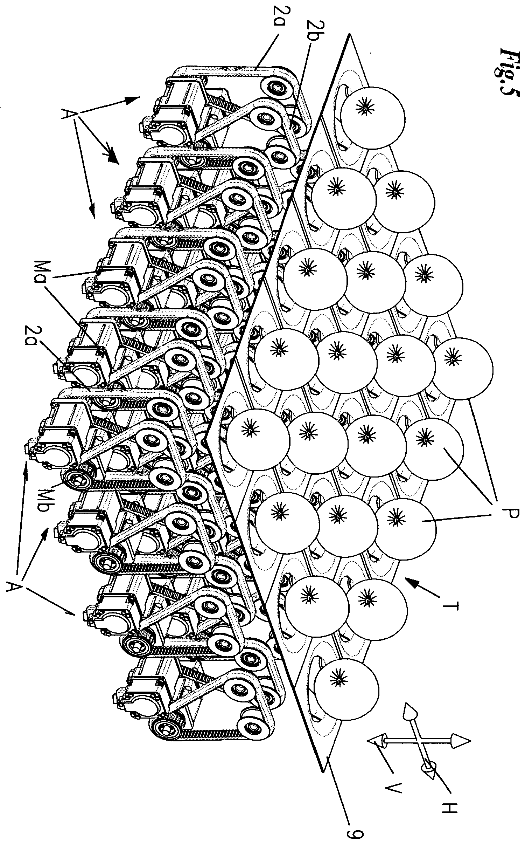

Die Fig. 5 zeigt in perspektivischer Darstellung eine Reihe von Dreh- und Positioniervorrichtungen mit Elementen mit Mulde von der, in den Fig. 3 und 4 gezeigten, Art.

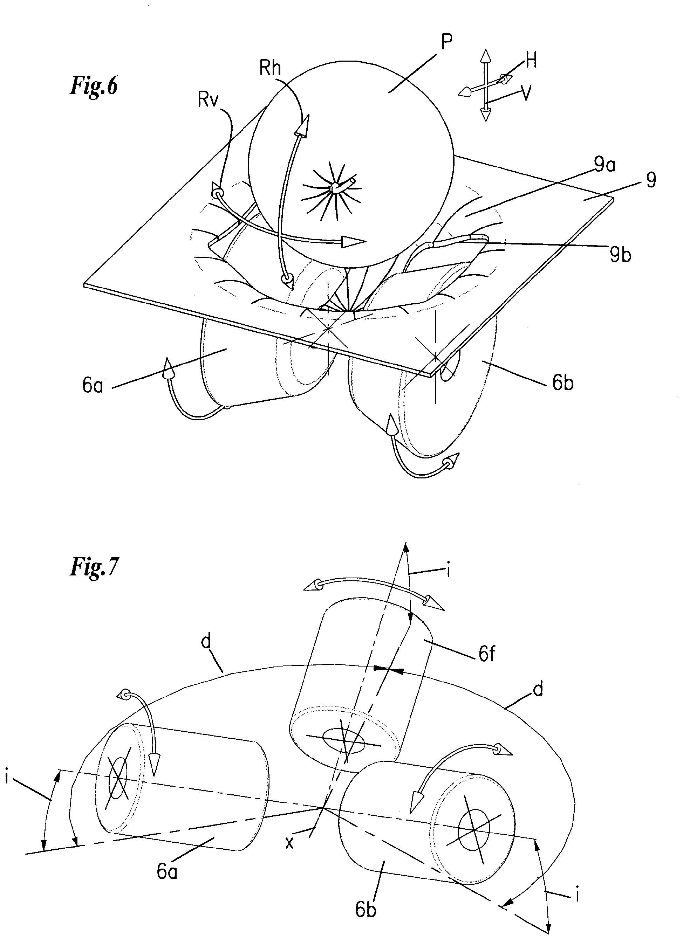

Die Fig. 6 zeigt in perspektivischer Darstellung einen, gemäß unterschiedlicher Achsen, durch nur zwei Rollen deren Achsen in einer einzigen Ebene liegen, in Drehung versetzten Apfel; die Position des Apfels auf den Rollen ist durch ein steifes Element mit Mulde mit seitlichen Durchbrüchen gesichert, dabei sind letztere den darunter liegenden Rollen angepasst.

Die Fig. 7 zeigt in perspektivischer Darstellung die Positionierung von drei Rollen einer erfindungsgemäßen Dreh- und Positioniervorrichtung, ohne Elemente mit Mulde, deren Drehachsen eventuell betreffend die Neigung verstellbar sind und zu einem mittigen Punkt konvergieren; eventuell ist eine der Rollen frei laufend um nur als Auflage für den Apfel zu wirken.

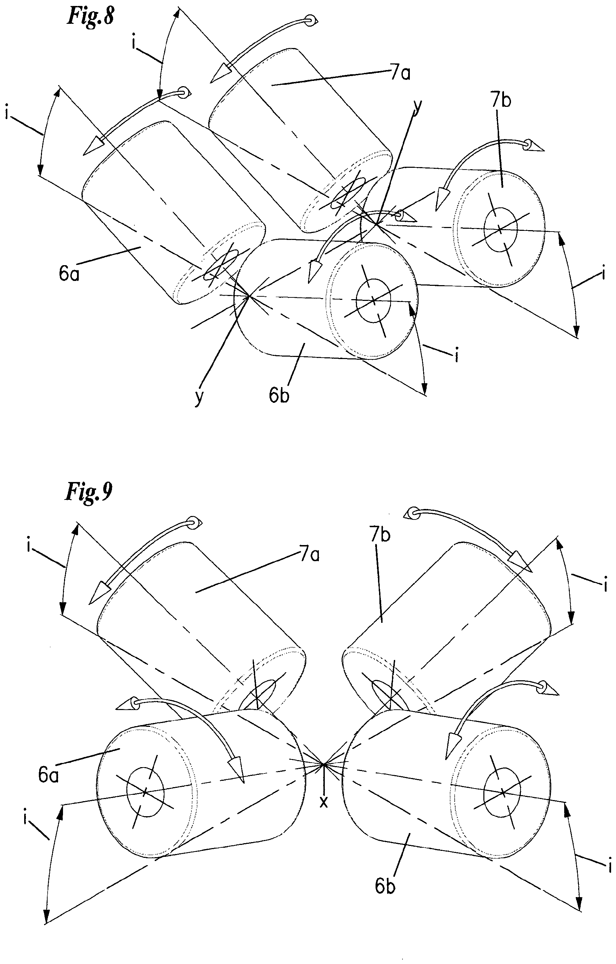

Die Fig. 8 zeigt in perspektivischer Darstellung die Stellung der vier Rollen einer erfindungsgemäßen Dreh- und Positioniervorrichtung deren, gegebenenfalls in der Neigung verstellbare, Drehachsen zu einer Mittellinie konvergieren welche in einer horizontalen tiefer liegenden Ebene sich erstreckt.

Die Fig. 9 zeigt in perspektivischer Darstellung die Stellung der vier Rollen einer erfindungsgemäßen Dreh- und Positioniervorrichtung deren, gegebenenfalls in der Neigung verstellbare, Drehachsen zu einem mittigen Punkt konvergieren.

Der erfindungsgemäße Mechanismus A der Dreh- und Positioniervorrichtung für Äpfel P besteht aus einem steifen Rahmen welcher aus zwei, durch Abstandhalter 11 zusammengehaltene, Platten 10 zusammengesetzt ist und zwei Zapfen 6, 6b mit, in Achsrichtung zueinander beabstandeten, kegelstumpfförmigen Rollen 6a, 7a und 6b, 7b aufweist welche, gegen die Seite der Platten 10 hin, Riemenscheiben 3a, 4a und 3b, 4b aufweisen. Die besagten Riemenscheiben werden paarweise durch getrennte Motoren Ma, Mb mit treibenden Riemenscheiben 1a, 1b, über zwei Zahnriemen 2a, 2b, angetrieben. Zwischen den angetriebenen Riemenscheiben 3a, 4a, bzw. 3b, 4b, laufen die entsprechenden Riemen über eine Umlenk- und Spannriemenscheibe 5a, 5b (Fig. 1, 2, 3, 4). Im Fall der gleichläufigen Drehung der beiden Rollenpaare 6a, 7a und 6b, 7b, wird der auf den Rollen aufliegende Apfel in Drehung Rh um eine (horizontale) Achse, wesentlich parallel zu den Drehachsen der Rollen, versetzt. Im Fall der Drehung mit unterschiedlicher Drehzahl oder einer gegenläufigen Drehung der Rollenpaare 6a, 7a und 6b, 7b, wird der auf den Rollen aufliegende Apfel P hingegen in eine Drehung Rv um eine (vertikale) wesentlich senkrecht zu den, zueinander parallelen, in einer Ebene liegenden, Drehachsen der Rollen verlaufenden Drehachse, versetzt. Durch Wiederholen der abwechselnden oder auch gleichzeitigen Drehungen Rh, Rv, ist es möglich jeden Bereich der Außenfläche des Apfels P visuellen oder instrumentalen Erhebungen zu unterziehen, indem die geeigneten Erhebungsvorrichtungen, z.B. für farbliche und/oder geometrische Erhebungen, in einem oder in mehreren Bereichen, in der Nähe des Apfels P vorgesehen sind.

Sobald, z.B. die Vorrichtungen für die geometrischen Erhebungen die Position des Stängels erfasst haben, wird der Apfel P durch Drehungen Rh, Rv so positioniert, dass dieser seitlich, mit der Achse des Apfels wesentlich parallel zu den Drehachsen der Rollen, positioniert wird, gleichzeitig oder anschließend wird, durch die Drehung Rh des Apfels, z.B. der Bereich mit der stärksten Rotfärbung ermittelt und der Apfel P so positioniert, dass dieser Bereich z.B. oben liegend positioniert wird. Sobald der Apfel P diese gewünschte Position einnimmt werden die Rollen arretiert.

Die Heranförderung H der einzelnen Äpfel P an die Antriebsgruppen A, A1 kann erfindungsgemäß mittels steifer, untereinander zu einem Förderband verketteter, Elemente 9 mit Mulde erfolgen. Die besagten steifen Elemente 9 mit Mulde weisen mindestens eine Mulde 9a auf, welche geeignet ist einen Apfel P aufzunehmen, seitlich weist die besagte Mulde 9a Durchbrüche 9b auf, welche der Form und den Ausmaßen der Rollen so entsprechen dass, durch Absenken V der steifen Elemente 9 mit Mulde im Bereich der Rollen der darunter angeordneten Antriebsgruppen, der Apfel P auf den Rollen aufliegt. Nach den erfolgten Erhebungen und der gewünschten Positionierung des Apfels, werden die Rollen/Riemen arretiert und wird dieser, durch Anheben V des steifen Elementes 9 mit Mulde 9a, von den darunter angeordneten Rollen abgehoben und in Richtung der anschließenden Bearbeitungen und Verpackung weitertransportiert H, wobei die auf den Rollen bestimmte Positionierung beibehalten wird. Um die Erhebungen und die Positionierung an einer hohen Anzahl von Äpfeln P in kurzer Zeit durchführen zu können, ist es möglich eine große Anzahl von Antriebsgruppen A, A1 vorzusehen welche mit einem Förderband T aus, quer zur Förderrichtung H zusammengesetzten, steifen Elementen 9 besteht, wobei diese untereinander verkettet sind und mehrere Mulden 9a für die Aufnahme einer großen Anzahl von Äpfeln P, aufweisen. Um das Auflegen und das Anheben der Äpfel P auf, bzw. von, den Rollen 6a, 7a; 6b, 7b zu erreichen, ist es möglich das Förderband T, welches aus steifen Elementen 9 zusammengesetzt ist, vertikal zu bewegen V oder die Antriebsgruppen A (Fig. 5) vertikal zu bewegen V.

Erfindungsgemäß kann der Apfel P, im Fall der Anwendung von nur zwei, getrennt antreibbaren Rollen 6a, 6b, während der übertragenen Drehungen Rh, Rv, innerhalb der Mulde 9a mit seitlichen Durchbrüchen 9b eines steifen Elementes 9 oder innerhalb einer Gitteröffnung eines Gitters, zurückgehalten werden. Die Rotationsachsen der besagten Rollen können zueinander koaxial und in der selben Ebene, eventuell mit verstellbarer Neigung, verlaufen (Fig. 6), sie können zu einem einzigen Punkt X (Fig. 7) konvergieren, in diesem Fall kann auch die gegenseitige Ausrichtung zwischen den einzelnen Drehachsen unterschiedlich, eventuell einstellbar d, sein. Die frei laufende Rolle 6f kann von einer Kugel oder einem Rädchen, welche schwenkbar gelagert sind, ersetzt werden um eine Auflage mit Rollreibung für beide Drehungen Rh, Rv zu schaffen.

Auch im Fall von zwei Rollenpaare können die Drehachsen, eventuell veränderbar, angewinkelt i sein und zu zwei Punkte Y ausgerichtet sein welche sich auf einer tiefer liegenden, horizontal oder geneigt verlaufenden Geraden befinden, wobei die Drehachsen der nebeneinander liegenden Rollen zueinander parallel (Fig. 8) verlaufen oder zu einem einzigen Punkt X (Fig. 9) ausgerichtet sind, auch in diesem Fall können zwei der gegenüber liegenden Rollen (z.B. 6a, 7b) frei laufend sein und als Auflage dienen.

Natürlich erfolgt die Übertragung der Bewegung von den Motoren Ma, Mb auf die Rollen, im Fall von, eventuell verstellbaren, geneigten Drehachsen, mittels Riemen mit rundem Querschnitt, mittels Gummischeiben oder mittels Kegelzahnräder.

Erfindungsgemäß kann, zwecks Drehung Rv gemäß einer vertikalen Achse eines Gegenstandes mit ebener Auflagefläche, dieser direkt auf die Riemen 2a, 2b (Fig. 1b) aufgelegt werden, welche in diesem Fall größere Breite haben können und mit einem minimalen Abstand nebeneinander angeordnet sein können. Die Drehung Rv erfolgt in diesem Fall sobald sich die Riemen 2a, 2b in die gleiche Richtung, jedoch mit unterschiedlicher Geschwindigkeit bewegen oder sich gegenläufig bewegen. Auch in diesem Fall ist der Gegenstand in einem Element 9 mit Mulde 9a enthalten welches Durchbrüche 9b aufweist durch welche der Gegenstand auf den darunter angeordneten Riemen aufliegt welche, im Bereich dieser Durchbrüche 9b, geradlinig verlaufen und beide über zwei Umlenkriemenscheiben laufen oder kreisbogenförmig verlaufen indem beide über nur eine Umlenkriemenscheibe laufen.

Im Fall der Bearbeitung von Gegenständen (P) mit unregelmäßiger Form, hat die Form der Mulde 9a des Elementes 9 eine entsprechende Form und es können am selben Element 9 mit Mulde ein oder mehrere bewegliche Stellorgane vorgesehen sein um eine Positionierung des Gegenstandes (P) zu erreichen und beizubehalten, welche die Erhebungen an diesem und die Entnahme des selben erleichtern. Diese beweglichen Stellorgane können auch an jedem der Antriebsgruppen A, A1 vorgesehen sein und durch einen eigenen, am Element 9 mit Mulde vorgesehenen, Durchbruch hindurch wirken.

## Patentansprüche

1. Dreh- und Positioniervorrichtung umfassend mindestens zwei Rollen (6a, 6b; 7a, 7b) oder zwei zueinander parallele Riemen (2a, 2b) welche jeweils über mindestens eine Umlenkriemenscheibe (8a, 8b) laufen, welche einen auf ihnen aufgelegten Gegenstand (P) aufnehmen und diesem die Drehung der Rollen, bzw. die Bewegung der Riemen, übertragen um diesen in Drehung (Rh) um eine horizontale Achse, parallel zu den Achsen der Rollen, bzw. zu den Achsen der Umlenkriemenscheiben der Riemen (2a, 2b), oder in Drehung (Rv) um eine, zu den Achsen der genannten Rollen/Riemenscheiben, vertikale Achse zu versetzen, wobei der aufgelegte Gegenstand (P) in einem Element (9) mit Mulde (9a) enthalten ist wobei diese Mulde Durchbrüche (9b) aufweist, **dadurch gekennzeichnet, dass** der Gegenstand (P) durch die Durchbrüche (9b) mit den darunter angeordneten, von getrennten Motoren (Ma, Mb) individuell angetriebenen, Rollen (6a, 6b; 7a, 7b), bzw. Riemen (2a, 2b), einer Antriebsgruppe (A, A1) der Dreh-und Positioniervorrichtung in Berührung ist und dass das besagte Element (9) mit Mulde oder die entsprechende, darunter angeordnete Antriebsgruppe (A, A1), oder beide, vertikal (V) bewegbar sind um den Gegenstand (P) mit den Rollen (6a, 6b; 7a, 7b), bzw. mit den Riemen (2a, 2b), in Berührung zu bringen, bzw. von diesen abzuheben, wobei der Gegenstand (P) die von den Rollen, bzw. Riemen, bestimmte Position beibehält.

2. Dreh- und Positioniervorrichtung gemäß Anspruch 1, **dadurch gekennzeichnet, dass** die Elemente (9) mit Mulde (9a) unter sich verkettet sind um ein, mit mindestens einer in Förderrichtung (H) angeordneten Reihe von Elementen (9) zusammengesetztes, Förderband (T) zu bilden, dass dieses Förderband die Form eines Gitters haben kann, wobei die einzelnen Gitterfenster die obgenannten Mulden (9a) ersetzen und dass der Achsabstand zwischen den Elementen (9) mit Mulde, dem Achsabstand der darunter angeordneten Antriebsgruppen (A, A1) entspricht.

3. Dreh- und Positioniervorrichtung gemäß Anspruch 1, **dadurch gekennzeichnet, dass** die Rollen (6a, 7a; 6b, 7b), bzw. die Riemen (2a, 2b) einzeln, voneinander unabhängig, mit verstellbarer Drehzahl angetrieben sind, dass im Fall zweier sich paarweise gegenügerliegend angeordneter Rollen (6a+7a; 6b+7b), voneinander unabhängig durch zwei getrennte Motoren (Ma, Mb) über Riemen (2a, 2b), Ketten oder andere Übertragungsmittel mit verstellbarer Drehzahl angetrieben sind, dass im Fall von drei Rollen, ein Rollenpaar (6a, 6b) von einem Motor angetrieben wird und die weitere gegenüberliegende einzelne Rolle (6f) vom zweiten Motor angetrieben ist, oder dass die beiden Rollen (6a, 6b) über getrennte Motoren (Ma, Mb) angetrieben sind, während die dritte gegenüber liegende Rolle (6f) im Leerlauf ist und dass durch diese Anordnung und diesen Antrieb der Rollen, bei gleich laufenden Drehungen und gleicher Drehzahl, bzw. bei gleicher Umfangsgeschwindigkeit aller Rollen, die Drehung (Rh) des aufgelegten Gegenstandes (P) um eine, zu den Drehachsen der angetriebenen Rollen, wesentlich parallele Achse erfolgt, während durch die gegenläufige Drehung oder bei unterschiedlicher Drehzahl der Rollenpaare, bzw. eines Rollenpaares und einer einzelnen Rolle, oder zweier zueinander unabhängig angetriebener Rollen, eine Drehung (Rv) des aufgelegten Gegenstandes (P) um eine wesentlich vertikal zu den Drehachsen der Rollen verlaufenden Achse erfolgt.

4. Dreh- und Positioniervorrichtung gemäß Anspruch 1, **dadurch gekennzeichnet, dass** die Mulde (9a) des Elementes (9), bzw. das Gitterfenster eines Gitters, welche den zu bearbeitenden Gegenstand (P) aufnehmen, mit Rollen, Kugeln und/oder einstellbaren Auflagen ausgestattet sind welche die Drehungen (Rh, Rv) des Gegenstandes (P) begünstigen.

5. Dreh- und Positioniervorrichtung gemäß Anspruch 1, **dadurch gekennzeichnet, dass** die Drehachsen der einzelnen Rollen (6a, 7a; 6b, 7b; 6f) in der selben Ebene liegen und dass, im Fall dreier Rollen (6a, 6b, 6f) mindestens die Drehachse der dritten Rolle so angeordnet ist, dass sie die Drehachsen der ersten zwei Rollen (6a, 6b) durchkreuzt.

6. Dreh- und Positioniervorrichtung gemäß Anspruch 1, **dadurch gekennzeichnet, dass** die Drehachsen aller oder eines Teiles der Rollen (6a, 7a; 6b, 7b; 6f) geneigt (i) sind und paarweise zu zwei, unter sich beabstandete, tiefer liegende Punkte (Y) oder zu einem einzigen tiefer liegendem Punkt (X) konvergieren.

7. Dreh- und Positioniervorrichtung gemäß Anspruch 1, **dadurch gekennzeichnet, dass** die in gleicher Ebene liegenden oder die geneigt (i) angeordneten, zu einem Punkt (X) oder zu zwei Punkte (Y) konvergierenden Drehachsen, zueinander so ausgerichtet werden können, dass sie unter sich unterschiedliche Winkel bilden.

8. Dreh- und Positioniervorrichtung gemäß Anspruch 1, **dadurch gekennzeichnet, dass** das steife Element (9) mit Mulde (9a) und seitlichen Durchbrüchen (9b), bzw. das Gitterfenster, welches den zu bearbeitenden Gegenstand (P) aufnimmt, oder dass die entsprechende Antriebsgruppe (A, A1), mit mindestens einem beweglichen Stellorgan ausgestattet ist welches auf den Gegenstand (P) wirkt um diesen in eine, für die Erhebung und die anschließende Entnahme, günstige Position zu bringen und um diese Position des Gegenstandes beizubehalten.

9. Dreh- und Positioniervorrichtung gemäß Anspruch 1, **dadurch gekennzeichnet, dass** der zu bearbeitende Gegenstand (P) aus den Mulden (9a) der Elemente (9) mit Mulden, bzw. aus dem Gitterfenster eines Gitters, mittels bekannter Greiforgane entnommen wird welche mit Saugnapf, Zange, oder dergleichen ausgestattet sind und wesentlich senkrecht zu den Elementen (9) mit Mulde, bzw. zu den Gitterfenstern, wirken.

10. Dreh- und Positioniervorrichtung gemäß Anspruch 1, **dadurch gekennzeichnet, dass** die Rollen (6a, 7a; 6b, 7b) kegelförmig, kegelstumpfförmig, kugelförmig sind oder die Form eines anderen Rotationskörpers haben und dass diese Form aufgrund der Form der in Drehung (Rh, Rv) zu versetzenden Gegenstände (P) gewählt wird und dass diese Gegenstände, im Fall dass sie eine ebene Auflagefläche aufweisen, direkt auf die Riemen (2a, 2b), der Antriebsgruppe (A1) aufgelegt werden, welche eine geeignete Breite aufweisen und mit einem minimalen Abstand nebeneinander angeordnet sind.

## Claims

1. A rotating and positioning device comprising at least two rollers (6a, 6b; 7a, 7b) or two parallel belts (2a, 2b), each passing over at least one pulley (8a, 8b), which receive an object (P) placed on them and transmit to it the rotation of the rollers or the movement of the belts to impart to the object a rotation (Rh) about a horizontal axis parallel to the axes of the rollers, respectively to the axes of the pulleys of the belts (2a, 2b), or a rotation (Rv) about an axis vertical to the axes of said belts/pulleys, the object (P) placed thereon being contained in an element (9) comprising a trough (9a), said trough having apertures (9b), **characterised in that** the object (P) is in contact, through the apertures (9b), with the rollers (6a, 6b; 7a, 7b), respectively belts (2a, 2b) arranged below it that are individually driven by separate motors (Ma, Mb) of a drive group (A, A1) of the rotating and positioning device, and **in that** said trough-comprising element (9) or the corresponding drive group (A, A1) arranged below it, or both, are vertically (V) movable in order to bring the object (P) in contact with the rollers (63, 6b; 7a, 7b), respectively belts (2a, 2b), and to raise it from these, respectively, while the object (P) maintains the position determined by the rollers or belts, respectively.

2. The rotating and positioning device according to claim 1, **characterized in that** the elements (9) comprising the trough (9a) are interlinked to form a conveyor belt (T) composed of at least one row of elements (9) arranged in the direction of conveyance (H), **in that** this conveyor belt can be in the form of a grid, the individual grid windows replacing the above-mentioned troughs (9a), and **in that** the centre distance between the trough-comprising elements (9) corresponds to the centre distance of the drive groups (A, A1) arranged below them.

3. The rotating and positioning device according to claim 1, **characterised in that** the rollers (6a, 7a; 6b, 7b), or the belts (2a, 2b), respectively, are driven individually, independently of one another, at adjustable speed, that in the case of two rollers being arranged in pairs opposite each other (6a+7a; 6b+7b) are driven independently of one another at adjustable speed by two separate motors (Ma, Mb) via belts (2a, 2b), chains or other transmission means, **in that**, in the case of three rollers, one pair of rollers (6a, 6b) is driven by one motor and the further opposite individual roller (6f) is driven by the second motor, or **in that** the two rollers (6a, 6b) are driven by separate motors (Ma, Mb), while the third opposite roller (6f) is idling, and **in that** by this arrangement and this drive of the rollers, at the same rotation speed and the same speed, respectively at the same circumferential speed of all rollers, the rotation (Rh) of the object (P) placed on top takes place about an axis substantially parallel to the axes of rotation of the driven rollers, while a rotation (Rv) of the object (P) placed on top takes place about an axis substantially vertical to the axes of rotation of the rollers by the rotation in opposite directions or at different speeds of rotation of the pairs of rollers, or of a pair of rollers and a single roller, or of two rollers driven independently of one another.

4. The rotating and positioning device according to claim 1, **characterised in that** the trough (9b) of the element (9), or the window of a grating, which receives the object (P) to be processed, is equipped with rollers, balls and/or adjustable supports which promote the rotations (Rh, Rv) of the object (P).

5. The rotating and positioning device according to claim 1, **characterized in that** the axes of rotation of the individual rollers (6a, 7a; 6b, 7b; 6f) lie in the same plane and **in that**, in the case of three rollers (6a, 6b, 6f), at least the axis of rotation of the third roller is arranged so as to cross the axes of rotation of the first two rollers (6a, 6b).

6. The rotating and positioning device according to claim 1, **characterized in that** the axes of rotation of all or part of the rollers (6a, 7a; 6b, 7b; 6f) are inclined (i) and converge in pairs towards two lower points (Y) spaced apart from each other or towards a single lower point (X).

7. The rotating and positioning device according to claim 1, **characterized in that** the axes of rotation lying in the same plane or the axes of rotation arranged inclined (i) and converging towards one point (X) or towards two points (Y) can be aligned with each other so that they form different angles between one another.

8. The rotating and positioning device according to claim 1, **characterized in that** the rigid element (9) comprising a depression (9a) and lateral apertures (9b), or the lattice window, which receives the object (P) to be processed, or the corresponding drive group (A, A1), is equipped with at least one movable actuator which acts on the object (P) to bring it into a position favourable for raising and subsequent removal of the object and to keep it in this position.

9. The rotating and positioning device according to claim 1, **characterized in that** the object (P) to be processed is removed from the troughs (9a) of the trough-comprising elements (9), or from the window of a grating, by means of known gripping members equipped with suction cups, pliers or the like, acting substantially perpendicularly to the trough-comprising elements (9), or to the windows of the grating.

10. The rotating and positioning device according to claim 1, **characterized in that** the rollers (6a, 7a; 6b, 7b) are conical, frustoconical, spherical or have the shape of another body of revolution and that this shape is chosen on the basis of the shape of the objects (P) to be set in rotation (Rh, Rv) and that these objects, in case they have a flat bearing surface, are directly placed on the belts (2a, 2b) of the drive group (A1), which have a suitable width and are arranged side by side with a minimum distance between one another.

## Revendications

1. Dispositif de rotation et de positionnement comprenant au moins deux rouleaux (6a, 6b ; 7a, 7b) ou deux courroies (2a, 2b) parallèles entre elles qui passent chacune sur au moins une poulie de renvoi (8a, 8b), qui reçoivent un objet (P) placé sur eux/elles et lui transmettent la rotation des poulies, ou le mouvement des courroies, pour le faire tourner (Rh) autour d'un axe horizontal parallèle aux axes des rouleaux, ou aux axes des poulies de renvoi des courroies (2a, 2b), ou pour le faire tourner (Rv) autour d'un axe vertical aux axes desdites rouleaux/poulies, l'objet ainsi placé (P) étant contenu dans un élément (9) comportant un creux (9a), ledit creux présentant des ouvertures (9b),
**caractérisé en ce que** à travers les ouvertures (9b), l'objet (P) est en contact avec les rouleaux (6a, 6b ; 7a, 7b) disposés en dessous et entraînés individuellement par des moteurs séparés (Ma, Mb), respectivement avec les courroies (2a, 2b), d'un groupe d'entraînement (A, A1) du dispositif de rotation et de positionnement, et **en ce que** ledit élément (9) à creux ou le groupe d'entraînement correspondant (A, A1) situé en dessous de celui-ci, ou les deux, sont mobiles verticalement (V) afin de mettre l'objet (P) en contact avec les rouleaux (6a, 6b ; 7a, 7b), respectivement les courroies (2a, 2b), et pour l'en soulever, respectivement, l'objet (P) gardant la position déterminée par les rouleaux respectivement les courroies.

2. Dispositif de rotation et de positionnement selon la revendication 1, **caractérisé en ce que** les éléments (9) à creux (9a) sont reliés entre eux pour former une bande transporteuse (T) composée d'au moins une rangée d'éléments (9) disposés dans la direction de transport (H), **en ce que** cette bande transporteuse peut avoir la forme d'une grille, les différentes fenêtres de la grille remplaçant les creux (9a) mentionnés ci-dessus, et **en ce que** l'entraxe entre les éléments (9) à creux correspond à l'entraxe des groupes d'entraînement (A, A1) disposés en dessous d'eux.

3. Dispositif de rotation et de positionnement selon la revendication 1, **caractérisé en ce que** les rouleaux (6a, 7a ; 6b, 7b), ou les courroies (2a, 2b), respectivement, sont entraînés individuellement, indépendamment les un(e)s des autres, à une vitesse réglable, que dans le cas de deux rouleaux disposés par paires en face l'un de l'autre (6a+7a ; 6b+7b), sont entraînés indépendamment l'un de l'autre par deux moteurs distincts (Ma, Mb) par l'intermédiaire de courroies (2a, 2b), de chaînes ou d'autres moyens de transmission à une vitesse de rotation réglable, **en ce que** dans le cas de trois rouleaux, une paire de rouleaux (6a, 6b) est entraînée par un moteur et l'autre rouleau individuel opposé (6f) est entraîné par le deuxième moteur, ou **en ce que** les deux rouleaux (6a, 6b) sont entraînés par des moteurs distincts (Ma, Mb), tandis que le troisième rouleau opposé (6f) est au ralenti, et **en ce que** par cet agencement et cet entraînement des rouleaux, respectivement en même sens et à la même vitesse de rotation respectivement à la même vitesse circonférentielle de tous les rouleaux, la rotation (Rh) de l'objet (P) placé sur le dessus a lieu autour d'un axe sensiblement parallèle aux axes de rotation des rouleaux entraînés, tandis qu'une rotation (Rv) de l'objet (P) placé sur le dessus autour d'un axe s'étendant sensiblement verticalement aux axes de rotation des rouleaux est engendrée par la rotation opposée ou à des vitesses de rotation différentes des paires de rouleaux, ou d'une paire de rouleaux et d'un seul rouleau, ou de deux rouleaux entraînés indépendamment l'un de l'autre.

4. Dispositif de rotation et de positionnement selon la revendication 1, **caractérisé en ce que** le creux (9a) de l'élément (9), ou la fenêtre d'une grille, qui reçoit l'objet (P) à traiter, est équipé de rouleaux, de billes et/ou de supports réglables qui favorisent les rotations (Rh, Rv) de l'objet (P).

5. Dispositif de rotation et de positionnement selon la revendication 1, **caractérisé en ce que** les axes de rotation des différents rouleaux (6a, 7a ; 6b, 7b ; 6f) se trouvent dans le même plan et **en ce que**, dans le cas de trois rouleaux (6a, 6b, 6f), au moins l'axe de rotation du troisième rouleau est disposé de manière à croiser les axes de rotation des deux premiers rouleaux (6a, 6b).

6. Dispositif de rotation et de positionnement selon la revendication 1, **caractérisé en ce que** les axes de rotation de tout ou partie des rouleaux (6a, 7a ; 6b, 7b ; 6f) sont inclinés (i) et convergent par paires vers deux points inférieurs (Y) espacés l'un de l'autre ou vers un seul point inférieur (X).

7. Dispositif de rotation et de positionnement selon la revendication 1, **caractérisé en ce que** les axes de rotation se trouvant dans le même plan ou les axes de rotation disposés de manière inclinée (i) et convergeant vers un point (X) ou vers deux points (Y) peuvent être alignés les uns avec les autres de manière à former entre eux des angles différents.

8. Dispositif de rotation et de positionnement selon la revendication 1, **caractérisé en ce que** l'élément rigide (9) à creux (9a) et ouvertures latérales (9b) ou la fenêtre de grille, qui reçoit l'objet (P) à traiter, ou le groupe d'entraînement correspondant (A, A1), est équipé d'au moins un actionneur mobile qui agit sur l'objet (P) pour l'amener dans une position favorable au soulèvement et au retrait ultérieur de l'objet et pour maintenir cette position de l'objet.

9. Dispositif de rotation et de positionnement selon la revendication 1, **caractérisé en ce que** l'objet (P) à traiter est retiré des creux (9a) des éléments (9) à creux, ou de la fenêtre d'une grille, au moyen d'organes de préhension connus qui sont équipés de ventouses, de pinces ou analogues et qui agissent sensiblement perpendiculairement aux éléments (9) à creux, respectivement aux fenêtres de la grille.

10. Dispositif de rotation et de positionnement selon la revendication 1, **caractérisé en ce que** les rouleaux (6a, 7a ; 6b, 7b) sont coniques, tronconiques, sphériques ou ont la forme d'un autre corps de révolution et que cette forme est choisie en fonction de la forme des objets (P) à mettre en rotation (Rh, Rv) et que ces objets, dans le cas où ils présentent une surface d'appui plane, sont directement appliqués sur les courroies (2a, 2b) du groupe d'entraînement (A1), qui ont une largeur appropriée et sont disposées côte à côte avec une distance minimale entre elles.
